# EUROPÄISCHE PATENTANMELDUNG

(11) **EP 3 078 407 A1**
(43) Veröffentlichungstag der Anmeldung: **12.10.2016**
(21) Anmeldenummer: 15163204.9
(22) Anmeldetag: 10.04.2015
(51) Int. Cl.: B01D 39/16

(54) **HOCHEFFIZIENTES UND BINDEMITTELFREIES FILTERMEDIUM**

(71) Anmelder: Carl Freudenberg KG, 69469 Weinheim (DE)
(72) Erfinder: Staudenmayer, Oliver, Dr., 69469 Weinheim (DE); Wagner, Rudolf, Dr., 79379 Müllheim (DE); Hollingsworth, Anthony, 69488 Birkenau (DE); Appelgrün, Michael, 79279 Vörstetten (DE); Sieh, Maik, 69207 Sandhausen (DE)

(57) **Zusammenfassung**

Ein plissier-oder faltbares, mechanisch filterndes Filtermedium, umfassend ausschließlich Synthesefasern, welche aus zumindest einem organischen Polymer gefertigt sind, wobei die Synthesefasern Monofasern und/ oder Bikomponentenfasern umfassen, wobei die Synthesefasern Mikrofasern mit einem mittleren Durchmesser kleiner gleich 4 µm und Feinstfasern mit einem mittleren Durchmesser kleiner gleich 7 µm umfassen, ist im Hinblick auf die Aufgabe, ein hocheffizientes Filtermedium anzugeben, bei welchem auf den Zusatz von sehr feinen Glasfasern verzichtet wird, dadurch gekennzeichnet, dass thermisch behandelte Monofasern und/ oder Bikomponentenfasern eine Verbindung und Verfestigung der Synthesefasern bewirken, wobei kein weiteres Bindemittel neben den Monofasern und/ oder Bikomponentenfasern vorgesehen ist, wobei keine Glasfasern vorgesehen sind und wobei die Synthesefasern alle in einer einzigen Lage verteilt vorliegen.

## Beschreibung

### Technisches Gebiet

Die Erfindung betrifft ein Filtermedium gemäß dem Oberbegriff des Patentanspruchs 1.

### Stand der Technik

Aus der EP 2 821 119 A1 ist ein Filtermedium bekannt geworden, welches mehrere Lagen umfasst, in denen Synthesefasern vorliegen.

Um eine mechanische Filtrationsleistung zu verbessern und feine Partikel besser abscheiden zu können, müssen Filtermedien mit einer immer feiner werdenden Porenstruktur versehen werden. Dies erreicht man üblicherweise, indem man im Filtermedium immer feinere Fasern einsetzt.

Glasmikrofasern sind sehr preisgünstige feine Fasern. Glasmikrofasern können unter größere Glasfasern gemischt sein und mit einer Bindesubstanz gebunden werden. Feinstaubfiltermedien dieser Art sind bereits bekannt. Glasfasern, speziell Mikroglasfasern, sind jedoch brüchig, so dass die Gefahr besteht, dass diese im Gebrauch brechen und in einen Reinluftstrom gelangen. Glasfasern sind überdies in der Diskussion, weil sie als gesundheitsbedenklich gelten.

### Darstellung der Erfindung

Der Erfindung liegt daher die Aufgabe zu Grunde, ein hocheffizientes Filtermedium anzugeben, bei welchem auf den Zusatz von sehr feinen Glasfasern verzichtet wird.

Die vorliegende Erfindung löst die zuvor genannte Aufgabe durch die Merkmale des Patentanspruchs 1.

Erfindungsgemäß bewirken thermisch behandelte Bikomponentenfasern und/ oder Monofasern die Verbindung und Verfestigung von Synthesefasern und/ oder der Bikomponentenfasern und/ oder der Monofasern selbst, wobei kein weiteres Bindemittel neben den Bikomponentenfasern oder Monofasern vorgesehen ist. Erfindungsgemäß besteht ein mechanisch wirksames Filtermedium aus synthetischen Fasern ohne Elektretwirkung. Bei dem hier beschriebenen Filtermedium wird auf den Zusatz von sehr feinen Glasfasern vollständig verzichtet.

Um Filtermedien als Bauteile oder in Bauteilen zu verwenden, müssen diese oftmals gefaltet oder plissiert werden. Durch eine Erhöhung der Oberfläche des Filtermediums im Bauteil kommt es zu einer Verbesserung der Filtrationsleistung. Dieses Vorgehen ist insbesondere bei Kassettenfiltern üblich.

Eine Faltung oder Plissierung von Filtermedien, die aus Gemischen von Synthesefasern und Glasfasern bzw. aus reinen Glasfasern hergestellt sind, ist durchführbar. Allerdings ist dies mit größerem technischen Aufwand verbunden. Diese Materialien haben bekanntermaßen eine geringe Festigkeit, sind sehr kurzdehnig und reißen bei der Verarbeitung leicht ein. Sie sind sehr empfindlich und daher schwierig zu verarbeiten. Die Faseroberfläche ist sehr empfindlich gegen Zerstörung bei einer Berührung.

Um Filtermedien aus oder mit Glasfasern vor einer Berührung zu schützen, die zur Zerstörung führen könnte, wird das Filtermedium im Bauteil oft baulich geschützt. Der Schutz kann durch einen aufwendigen Griffschutz bewirkt werden. Diese Nachteile werden mit den Filtermedien der hier vorliegenden Erfindung überwunden.

Das hier beschriebene Filtermedium aus Synthesefasern kann gefaltet, plissiert und rilliert, das heißt in Wellen gelegt werden, um anschließend zu einer Filterkassette verarbeitet zu werden. Es wird auf Glasfasern verzichtet.

Für eine solche Faltung oder Plissierung muss das Filtermedium eine ausreichende Steifigkeit bzw. Stabilität besitzen. Während der Konfektionierung zum Filterelement oder Bauteil bzw. im Gebrauch müssen die Synthesefasern stabil eingebunden sein.

Eine höhere Materialfestigkeit bedingt eine höhere Stabilität bzw. Steifigkeit. Dies in Verbindung mit einer gewissen Dehnfähigkeit führt dazu, dass das Filtermedium bei der Verarbeitung während der Plissierung oder Rillierung nicht reißt. Umgekehrt ist ein Filtermedium schwer zu verarbeiten, wenn es leicht reißt und eine geringe Dehnfähigkeit besitzt.

Üblicherweise erreicht man eine Steifigkeit durch Zusatz von Bindemitteln oder Klebstoffen, welche die Fasern miteinander verbinden. Diese Bindemittel sind jedoch oftmals teuer. Im hier beschriebenen Filtermedium wird auf Bindemittel verzichtet. Steifigkeit und Stabilität wird durch Zusatz von Bikomponentenfasern und/ oder Monofasern in die Fasermatrix und deren thermische Aktivierung bei der Vliesstoffherstellung erreicht.

Die Bikomponentenfasern besitzen vorteilhaft eine Kern-Mantel- oder Side-by-side- Struktur, bei der die Fasern neben einer tiefer schmelzenden Polymerkomponente eine höher schmelzende Polymerkomponente besitzen. Die tiefer schmelzende Polymerkomponente schmilzt bei der Verfestigung des Faserflors in einem Trockner nach einem Thermofusionsverfahren oder einem Kontakthitzeverfahren und wandert zu Faserkreuzungspunkten.

Nach dem Erkalten der Polymerschmelze wird der Faserverbund fest und steif. Im hier beschriebenen Filtermedium wird auf den Zusatz von Bindemitteln, Klebstoffen oder dgl. verzichtet, so dass außer den Bikomponentenfasern und/ oder Monofasern keine weiteren Bindekomponenten hinzugefügt werden müssen.

Insoweit ist ein hocheffizientes Filtermedium angegeben, bei welchem auf den Zusatz von sehr feinen Glasfasern verzichtet wird.

Folglich ist die eingangs genannte Aufgabe gelöst.

Im Gegensatz zum Filtermediums gemäß der EP 2 821 119 A1 liegen die Synthesefasern des erfindungsgemäßen Filtermediums alle in einer einzigen Lage vor. Das erfindungsgemäße Filtermedium weist keine Grenzflächen zwischen einzelnen Lagen auf, da es nur aus einer einzigen Lage besteht.

Das Filtermedium könnte eine Filtrationsleistung mit einem Durchlassgrad gegenüber NaCl-Aerosol von weniger als 60% zeigen, wobei dieser Wert durch eine interne Prüfung mit einem Testgerät des Typs TSI 8130 bei 48 l/min, 8 cm/s gemessen wurde.

Die Monofasern und/ oder Bikomponentenfasern könnten mittlere Durchmesser im Bereich zwischen 200 nm und 36 µm aufweisen, wobei die Monofasern und/ oder Bikomponentenfasern alle in einer Lage gemischt verteilt sind.

Vorteilhaft sind für den Aufbau eines Filtermedium Bikomponentenfasern mit einem mittleren Durchmesser im Bereich 7 µm bis 36 µm mit Feinstfasern gemischt, nämlich mit Mono- oder Bikomponentenfasern, deren mittlerer Durchmesser im Bereich < 7 µm liegt, und mit Mikrofasern, deren mittlerer Durchmesser im Bereich von 200 nm bis 4 µm liegt. Die Bikomponentenfasern dienen als Gerüstfasern.

Bevorzugte Polymere, welche die Bikomponentenfasern aufweisen, sind PES (Polyester). Bevorzugt wird für effiziente Filterelemente eine Fasermischung verwendet, die aus PES-Bikomponentenfasern mit einem mittleren Durchmesser von 7 bis 12 µm, PES Feinstfasern mit einem mittleren Durchmesser von < 5 µm und PES-Mikrofasern mit einem mittleren Durchmesser von 2 bis 4 µm besteht.

Ein Teil der Monofasern und/ oder Bikomponentenfasern könnte mittlere Durchmesser zeigen, die im Bereich kleiner 7 µm liegen, und Feinstfasern aufweisen. Auch ein Teil der Synthesefasern könnte mittlere Durchmesser im Bereich kleiner 7 µm zeigen und Monofasern und Feinstfasern aufweisen.

Die Synthesefasern und/ oder Monofasern und/ oder Bikomponentenfasern könnten vor diesem Hintergrund zumindest teilweise mittlere Durchmesser aufweisen, die im Bereich 200 nm bis 36 µm liegen.

Die Synthesefasern und/ oder Monofasern und/ oder Bikomponentenfasern könnten zumindest teilweise als Feinstfasern ausgestaltet sein, wobei die als Feinstfasern ausgestalteten Synthesefasern und/ oder Monofasern und/ oder Bikomponentenfasern mittlere Durchmesser aufweisen, die im Bereich 200 nm bis 7 µm liegen.

Die Synthesefasern und/ oder Monofasern und/ oder Bikomponentenfasern könnten teilweise als Mikrofasern ausgestaltet sein, wobei die als Mikrofasern ausgestalteten Synthesefasern und/ oder Monofasern und/ oder Bikomponentenfasern mittlere Durchmesser aufweisen, die im Bereich 200 nm bis 4 µm liegen.

Die Bikomponentenfasern können einen Gewichtsanteil von 40 % bis 70 %, die Feinstfasern einen Gewichtsanteil von 20 % bis 50 % und die Mikrofasern einen Gewichtsanteil von 0 bis 45 % am Filtermedium ausmachen.

Bevorzugte Anteile der Bikomponentenfasern sind 40 % bis 55 % Gewichtsanteile, bevorzugte Anteile der Feinfasern sind 25 % bis 35 % Gewichtsanteile und bevorzugte Anteile der Mikrofasern sind 15 % bis 35 % Gewichtsanteile.

Diese speziellen Kombinationen an Fasern ermöglichen ein stabiles, plissierfähiges Filtermedium, ohne die Verwendung von Glasmikrofasern mit einem Durchlassgrad NaCl von < 60 % (interne Prüfung mit Testgerät TSI 8130 bei 48 l/min, 8 cm/s) ohne die Verwendung von Bindemitteln.

Bevorzugt wird für die Vliesstoffherstellung ein Naßvliesprozess eingesetzt. Bei diesem Prozess werden ungekräuselte Kurzschnittfasern oder Faserbruchstücke (Pulp) in Wasser mit Hilfe von Dispergiermitteln gemischt, auf einem Entwässerungsband abgelegt, entwässert, getrocknet und gebunden. Dieser sogenannte Wetlaid-Prozess ist dem Prozess zur Papierherstellung sehr ähnlich, in der Industrie bekannt und hier deshalb nicht beschrieben.

Um eine optimale Steifigkeit zu erzielen, werden bevorzugt zumindest anteilig PES-Fasern als Gerüst- und Bikomponentenfasern eingesetzt. Um eine Temperaturstabilität zu gewährleisten und eine Verformung im Gebrauch bei > 100°C zu vermeiden, werden Monofasern und/ oder Bikomponentenfasern mit Schmelzpunkt der Bindekomponenten > 140°C, bevorzugt > 180°C, eingesetzt.

Speziell mit Monofasern und/ oder Bikomponentenfasern mit hoher Schmelzpunkttemperatur, nämlich insbesondere >180 °C, erhält man Vliesstoffe, welche temperaturstabil sind. Dadurch können beim Plissieren höhere Plissiertemperaturen angewendet werden, ohne die Fasermatrix zu zerstören. Höhere Plissiertemperaturen sind vorteilhaft für höhere Plissiergeschwindigkeiten, bessere Faltenausbildung und liefern insgesamt ein mechanisch robusteres Material bei Temperatureinwirkung.

Eine bevorzugte Ausführung des Filtermediums aus 100% PES ist zudem nicht feuchtigkeitsempfindlich, da PES nicht feuchtigkeitsempfindlich ist. Durch die höhere Festigkeit des Materials verglichen mit Mikroglasmedien und gleichzeitig geringerer Feuchtigkeitsempfindlichkeit sind solche Filtermedien in feuchter Umgebung im Filterbetrieb gut einsetzbar, da es zu keiner Deformierung des stabilen Materials kommt.

Deformationen führen insbesondere bei Filterkassetten mit geringem Faltenabstand sehr leicht zu einer Erhöhung des Druckverlustes, da sich die Falten aneinander anlegen. Weiterhin vorteilhaft erweist sich eine Abwesenheit von Bindemitteln, wie sie in Glasmedien verwendet werden.

Bindemittel sind meist hydrophil. Zur Herstellung einer Deformationsbeständigkeit aufgrund von Feuchtigkeitseinwirkung müssen diese in einem weiteren Arbeitsgang und mit teuren oder oftmals umweltschädlichen Chemikalien, beispielsweise Fluorcarbon, hydrophob ausgerüstet werden. Diese Nachteile zeigen die hier beschriebenen Filtermedien nicht.

Die Mikrofaser- und Feinstfaserpolymere sind in ihrem Schmelzverhalten abhängig vom Schmelzpunkt der eingesetzten Monofasern und/ oder Bikomponentenfasern so auszuwählen, dass diese bei der thermischen Verfestigung nicht ihre faserförmige Struktur verlieren. Gleichzeitig müssen die verwendeten Polymere zumindest chemisch ähnlich sein, um eine optimale Bindung zu gewährleisten.

Die Feinstfasern, insbesondere Mono- oder Bikomponentenfasern, können aus PES (Polyester), CoPES (Copolyester), PP (Polypropylen), PE (Polyethylen), CoPP (Copolypropylen), PA (Polyamid), CoPA (Copolyamid) oder Kombinationen all dieser Polymere bestehen. Bevorzugt ist die überwiegende Komponente oder Hauptkomponente jedoch PES.

Die Mikrofasern, insbesondere Mono- oder Bikomponentenfasern, weisen mittlere Durchmesser im Bereich zwischen 200 nm und 7 mm auf und können aus verschiedensten Polymeren bestehen.

Die Polymere können aus den folgenden Polymerklassen ausgewählt sein:
PU (Polyurethan), PMMA (Polymethylmethacrylat), PA (Polyamide mit unterschiedlichen Monomeren), PLA (Polylactid), PAN (Polyacrylnitril), PP (Polypropylen), PE (Polyethylen), Copolyolefin, PVAL (Polyvinylalkohol), PES (Polyester), PET (Polyethylenterephthalat), CoPES (Copolyester) und/ oder PBT (Polybutylterephthalat) und können nach unterschiedlichen Verfahren hergestellt werden.

Bevorzugt werden Polymere mit einem hohen Schmelzpunkt, insbesondere > 170°C, verwendet.

Durch die Verwendung von mindestens drei Fasertypen mit unterschiedlichen Faserdurchmessern entsteht in einem Nassvliesprozess durch die Entwässerung eine Faserstruktur mit einem Gradienten von Bereichen mit eher sehr feinen und eher gröberen Fasern.

Dieser Aufbau eines Gemisches aus eingangs erwähnten Fasern ist technisch einfacher zu realisieren als ein mehrlagiger Aufbau bzw. Laminataufbau von groben Fasern und Feinst- oder Mikrofasern, die über einen mehrstufigen Prozess, beispielsweise einschließlich einer Laminierung, herzustellen sind.

Eine solche Laminierung erfordert zusätzliche Hilfsmittel, wie Klebstoffe (Laminierkleber) oder eine Ultraschallverschweißung, und ist somit teurer in der Herstellung als das hier beschriebene Filtermedium.

Auch ein sogenannter Mehrstoffauflauf bei der Nassvileslegung ist prinzipiell möglich, um mehrlagige Nassvliesstoffe zu realisieren.

Dies ist jedoch prozesstechnisch schwieriger zu beherrschen und mit höheren Fertigungskosten behaftet im Vergleich zu einem homogenen Einstoffauflauf, wie er hier beschrieben ist.

Das Filtermedium könnte mit einem Faserflächengebilde durch Verpressen thermisch verbunden sein.

Bei einem Verfahren zur Herstellung eines Filtermediums der hier beschriebenen Art könnte ein Wetlaidverfahren verwendet werden.

Das hier beschriebene Filtermedium könnte in einem Filterelement verwendet werden, welches zur Verwendung in Lüftungsanlagen, in Gasturbinen, in Reinräumen, in technischen Prozessen, in der Luftreinigung in Fahrzeugen, in Nutzfahrzeugen, in Wohnräumen, Gebäuden oder Büros vorgesehen ist.

Das hier beschriebene Filtermediums könnte auch bei der Filterung der Motorzuluft, der Entstaubung, im Bereich der Flüssigkeitsfilter oder als Träger für eine Membranbeschichtung verwendet werden. Denkbar ist auch eine Verwendung als Flüssigfilter.

Die guten filtertechnischen Eigenschaften des hier beschriebenen Filtermediums werden in den nachfolgenden Ausführungsbeispielen beschrieben.

In der Tabelle sind physikalische Daten und Eigenschaften der Ausführungsbeispiele aufgelistet.

### Ausführungsbeispiele:

In den folgenden Ausführungsbeispielen, wurden die jeweils angegebenen Fasermischungen mit Hilfe eines Dispergiermittels und eines mechanischen Rührwerks in Wasser eingebracht und im Laufe des Prozesses weiter verdünnt.

Die Fasersuspensionen wurden dann bei einer Konzentration von 0,01 bis 0,07 % mit Hilfe eines Siebes entwässert, welches im Nassvliesprozess üblich ist, getrocknet und thermisch verfestigt.

Zum Behandeln der in den Ausführungsbeispielen verwendeten Bikomponentenfasern wurde eine Trocknertemperatur von 220 °C gewählt. So wurden das Wasser der Medien entfernt und dann im trockenen Zustand die Polymere der Bikomponentenfasern aufgeschmolzen. Nach Abkühlung kam es zu einer Faser/Faser/Bindung mit hoher Festigkeit.

Die Temperaturstabilität für den nachfolgenden Prozess wurde durch den Schmelzpunkt der Bikomponentenfasern bestimmt, deren Schmelzpunkt im konkreten Fall 180 °C betrug.

Die Ausführungsbeispiele 1 und 2 der Tabelle zeigen deutlich höhere Festigkeiten in Längs- und Querrichtung als das Vergleichsbeispiel 2, welches zu 100 % aus Glasfasern mit Bindemittel besteht und einen ungefähr vergleichbaren Durchlassgrad DNaCl aufweist. Der Durchlassgrad ist ein Maß für die Filtrationseffizienz.

Das Vergleichsbeispiel 2 zeigt zwar eine etwas höhere Effizienz und eine etwas höhere Luftdurchlässigkeit als die Ausführungsbeispiele 1 und 2, besitzt aber dennoch deutlich geringere Festigkeiten, die sich nachteilig bei der Konfektionierung auswirken.

Auch dieses Filtermedium hat neben synthetischen Fasern einen Anteil an Glasfasern und ist mittels Bindemitteln gebunden.

In den Vergleichsbeispielen 1 und 2 zeigt sich eine deutlich geringere Dehnung in Längs- und Querrichtung. Das heißt, dass diese Filtermedien unter geringer Dehnung reißen, was sich nachteilig auf die Konfektionierung zum Falten, Plissieren oder Rillieren auswirkt, wo aufgrund von Biegeradien eine größere Dehnung weniger zur Beschädigung des Materials führt. Beide Vergleichsbeispiele bestehen zumindest anteilig aus den nachteiligen Glasmikrofasern.

Die Prüfung des Durchlassgrades und des Druckverlustes erfolgte mit einem Prüfgerät der Fa. TSI Modell 8130 bei 48 l/min (8 cm/s), einer Prüffläche von 99,32 cm² in Anlehnung an DIN EN 143:2007. Als NaCl-Aerosol wurde eine 2%ige NaCl Lösung verwendet.

Verwendung finden die beschriebenen Vliesstoffe als Filtermedium in plissierten bzw. gefalteten Filtern oder als Komponente in mehrlagigen Verbundmaterialien.

Als Komponenten für mehrlagige Verbundmaterialen sind die Filtermedien aufgrund ihrer höheren Dehnbarkeit besser verarbeitbar als die kurzdehnbaren Medien der Vergleichsbeispiele. Die bessere Verarbeitbarkeit ist vorteilhaft in Beschichtungsprozessen mit Aktivkohle für plissierte Aktivkohlefilter oder in Laminierprozessen mit anderen Materialien.

Die hier beschriebenen Filtermedien werden bevorzugt in aus diesen hergestellten Kassettenfiltern im Bereich der Lüftungsanlagen, Gasturbinen, Reinräumen, technischen Prozessen, aber auch der Luftreinigung in Fahrzeugen, Nutzfahrzeugen, Wohnräumen, Gebäuden oder Büros verwendet.

Nicht plissierte Filtermedien werden bevorzugt als Träger für Membranfilter verwendet, wo eine hohe Stabilität und eine geringe Porendichte verlangt werden, welche sich über die Fasermischung ebenfalls realisieren lassen.

Für spezielle Anwendungen in der Luftfiltration mit relativ hoher Staubbelastung und hohen Volumenströmen in einem Filterelement, ist es von Vorteil, hochfeste Filtermedien einzusetzen.

Der spezielle erfindungsgemäße Aufbau aus 100 % Synthesefasern mit Bikomponentenfasern erlaubt es in einer weiteren Ausführung, Spinnvliesstoffe, Meltblownvliesstoffe, Stapelfaservliesstoffe, Gelege, Gestriche, Gewebe oder andere/ ähnliche Faserflächengebilde zuzuführen, z.B. bei der Vliesstoffherstellung oder in einem Folgeprozess.

Mit Hilfe der Bikomponentenfasern im erfindungsgemäßen Vliesstoff ist es möglich, diesen mit dem zugeführten Material thermisch zu verbinden und die Fasermatrix noch zusätzlich zu verstärken.

Bevorzugt sind die zugeführten Flächengebilde aus Polymeren derselben Polymerklasse gefertigt wie die Bikomponentenfasern.

Übliche Flächengewichte dieser zugeführten Flächengebilde liegen im Bereich von 20 g/m² bis 250 g/m², bevorzugt im Bereich von 30 g/m² bis 150 g/m².

Im folgenden Muster A wurde ein Vliesstoff gemäß Ausführungsbeispiel 1 mit einem Vliesstoff aus 100% PES thermisch bei 220°C verpresst. Es entstand ein Verbundmaterial mit einer Trennkraft der beiden Lagen von 3,5 N/5cm. Die Messung der Trenn kraft der Lagen ist ein Maß der Laminatfestigkeit des Verbundes.

Im Muster B wurde das Material aus Vergleichsbeispiel 1 ebenfalls mit dem zuvor genannten Vliesstoff aus PES thermisch bei 220°C verpresst. Es ergab sich keinerlei Lagenhaftung der beiden Schichten.

Die bessere Lagenhaftung der Lagen in Muster A lässt sich durch die Verwendung von 100% Synthesefasern mit Bikomponentenfasern in Muster A und durch Abwesenheit von Bindemitteln und Glasfasern erklären, die in Muster B nicht zur besseren Lagenhaftung der Lagen beitragen. Somit weist Muster B Nachteile auf.

Ein Muster C aus Vergleichsbeispiel 2 und einem Vliesstoff aus PES, verpresst bei 220°C, zeigt ebenso keinerlei Trennkraft der Lagen und damit keine Laminatfestigkeit. Das ist erklärbar, da die verwendeten Glasfasern und Bindemittel nicht zum Vergeben/Verbinden der Lagen beitragen.

Bei Muster B und Muster C ließe sich nur eine Lagenhaftung erzielen, wenn die Lagen mit Hilfe eines Klebstoffes laminiert sind, was nachteilig ist, da dieser Prozess aufwendig ist.

Verwendung finden diese speziellen Ausbildungen der erfindungsgemäßen Filtermedien in plissierten und/oder rillierten Formen in Bauteilen mit unterschiedlichsten Geometrien, insbesondere in Filterpatronen, Kassettenfiltern oder gerollten Filtern.

Je nach den Anforderungen, die das Einsatzgebiet an ein Filterelement oder ein Luftfilterelement zur Verwendung in HVAC, in der Entstaubung, in einer Gasturbine, bei der Filterung der Motorzuluft, in der Raumluftreinigung, als Autoinnenraumfilter und im Flüssigkeitsfilterbereich stellt, kann dieses entsprechend ausgestaltet sein.

In den Ausführungsbeispielen ist die Faser 1 jeweils eine Bikomponentenfaser zum Aufschmelzen und Binden der Synthesefasern, während die Fasern 2 und 3 Monofasern sind, die nicht als Schmelz- oder Bindefasern verwendet werden.

**Tabelle:**

| | Einheit | Norm | Bsp. 1 | Bsp. 2 | Bsp. 3 | Vergleich 1 | Vergleich 2 |
|---|---|---|---|---|---|---|---|
| Gewicht | g/m² | DIN EN 29073-01 | 82 | 95 | 82 | 70 | 130 |
| Dicke 10 cm², 12,5cN/cm² | Mm | DIN EN ISO 9073-2, | 0,56 | 0,58 | 0,59 | 0,51 | 0,55 |
| Luftdurchlässigkeit/ 2 mbar | l/m²s | EN IS0 9237 | 320 | 205 | 345 | 220 | 501 |
| Durchlassgrad DNaCl % 48 l/min, Messfläche=99,32 cm² | % | Interne Prüfung mit TSI 8130 | 54 | 47 | 64 | 36 | 54 |
| Druckverlust ΔP 48 l/min, Messfläche=99.33 cm² | Pa | Interne Prüfung mit TSI 8130 | 52 | 74 | 49 | 36 | 34 |
| Fasern 1, (Polymer, Faserfeinheit) | | | 52% PES/PBT 11 µm | 44%PES/P BT 11 µm | 52%PES/PB T 11 µm | PES-Fasern gemischt mit Mikroglas fasern, gebunden mit Bindemitteln | 100 % Glasfaser Material gebunden mit Bindemitteln |
| Fasern 2, (Polymer, Faserfeinheit) | | | 28% PES 5µm | 23% PES 5 µm | 28% PES 5 µm | | |
| Fasern 3, (Polymer, Faserfeinheit) | | | 20% PES < 4µm | 22% PES < 4µm | 20 % Acrylfasem <1µm | | |
| Höchstzugkraft längs | N/5 cm | DIN EN 7500 | 143 | 203 | 119 | 117 | 71 |
| Höchstzugskraft Dehnung längs | % | DIN EN 7500 | 187 | 17 | 18 | 3,3 | 0,57 |
| Höchstzugkraft quer | N/5c m | DIN EN 7500 | 172 | 127 | 118 | 49 | 33 |
| Höchstzugkraft Dehnung quer | % | DIN EN 7500 | 17 | 24 | 14 | 4,6 | 0,6 |

## Patentansprüche

1. Plissier- oder faltbares, mechanisch filterndes Filtermedium, umfassend ausschließlich Synthesefasern, welche aus zumindest einem organischen Polymer gefertigt sind, wobei die Synthesefasern Monofasern und/ oder Bikomponentenfasern umfassen, wobei die Synthesefasern Mikrofasern mit einem mittleren Durchmesser kleiner gleich 4 µm und Feinstfasern mit einem mittleren Durchmesser kleiner gleich 7 µm umfassen,
**dadurch gekennzeichnet, dass**
thermisch behandelte Monofasern und/ oder Bikomponentenfasern eine Verbindung und Verfestigung der Synthesefasern bewirken, wobei kein weiteres Bindemittel neben den Monofasern und/ oder Bikomponentenfasern vorgesehen ist, wobei keine Glasfasern vorgesehen sind und wobei die Synthesefasern alle in einer einzigen Lage verteilt vorliegen.

2. Filtermedium nach Anspruch 1, **gekennzeichnet durch** einen Durchlassgrad gegenüber NaCl-Aerosol von weniger als 60%.

3. Filtermedium nach Anspruch 1 oder 2, **dadurch gekennzeichnet, dass** die Synthesefasern und/ oder Monofasern und/ oder Bikomponentenfasern mittlere Durchmesser aufweisen, die im Bereich 200 nm bis 36 µm liegen.

4. Filtermedium nach einem der voranstehenden Ansprüche, **dadurch gekennzeichnet, dass** die Synthesefasern und/ oder Monofasern und/ oder Bikomponentenfasern zumindest teilweise als Feinstfasern ausgestaltet sind, wobei die als Feinstfasern ausgestalteten Synthesefasern und/ oder Monofasern und/ oder Bikomponentenfasern mittlere Durchmesser aufweisen, die im Bereich 200 nm bis 7 µm liegen.

5. Filtermedium nach einem der voranstehenden Ansprüche, **dadurch gekennzeichnet, dass** die Synthesefasern und/ oder Monofasern und/ oder Bikomponentenfasern zumindest teilweise als Mikrofasern ausgestaltet sind, wobei die als Mikrofasern ausgestalteten Synthesefasern und/ oder Monofasern und/ oder Bikomponentenfasern mittlere Durchmesser aufweisen, die im Bereich 200 nm bis 4 µm liegen.

6. Verbundmaterial, umfassend ein Filtermedium nach einem der voranstehenden Ansprüche und ein Faserflächengebilde, wobei das Filtermedium mit dem Faserflächengebilde durch Verpressen thermisch verbunden ist.

7. Verfahren zur Herstellung eines Filtermediums nach einem der Ansprüche 1 bis 5, bei dem ein Wetlaidverfahren verwendet wird.

8. Verwendung des Filtermediums nach einem der Ansprüche 1 bis 5 in einem Filterelement zur Verwendung in Lüftungsanlagen, in Gasturbinen, in Reinräumen, in technischen Prozessen, in der Luftreinigung in Fahrzeugen, in Nutzfahrzeugen, in Wohnräumen, Gebäuden oder Büros, bei der Filterung der Motorzuluft, der Entstaubung, im Bereich der Flüssigkeitsfilter oder als Träger für die Membranbeschichtung zur Verwendung als Flüssigfilter.
